# EUROPÄISCHE PATENTSCHRIFT

(11) **EP 2 554 877 B1**
(45) Veröffentlichungstag und Bekanntmachung des Hinweises auf die Patenterteilung: **28.09.2016**
(21) Anmeldenummer: 11006408.6
(22) Anmeldetag: 04.08.2011
(51) Int. Cl.: F16J 15/16, F16J 15/32, F16J 15/56

(54) **Fluidtechnisches Gerät und Dichtungsring dafür**
Fluid device and gasket for same
Appareil fluidique et joint d'étanchéité correspond

(43) Veröffentlichungstag der Anmeldung: 06.02.2013
(73) Patentinhaber: FESTO AG & Co. KG, 73734 Esslingen (DE)
(72) Erfinder: Räpke, Falk, 72076 Tübingen (DE)
(74) Vertreter: Patentanwälte Magenbauer & Kollegen Partnerschaft mbB

(56) Entgegenhaltungen:
- EP-A1- 0 889 265
- WO-A1-2004/088182
- US-B1- 6 290 235

## Beschreibung

Die Erfindung betrifft ein fluidtechnisches Gerät, mit zwei in Richtung einer Hauptachse relativ zueinander linear bewegbaren Gerätekomponenten, von denen die eine Gerätekomponente die andere Gerätekomponente umschließt und zwischen denen ein zu der Hauptachse koaxialer Dichtungsring angeordnet ist, der in einer radial offenen und einen radial orientierten Nutgrund sowie eine hintere und eine vordere Nutflanke aufweisenden ringförmigen Haltenut der einen Gerätekomponente gehalten ist und der einen Tragabschnitt mit einer der hinteren Nutflanke zugewandten axialen Rückfläche sowie zwei von dem Tragabschnitt wegragende und konzentrisch zueinander angeordnete und axial in Richtung zu der vorderen Nutflanke ragende Dichtlippen aufweist, wobei die dem Nutgrund benachbarte Dichtlippe als statische Dichtlippe mit einer radial angeordneten ersten statischen Dichtfläche zur statisch abdichtenden Anlage an dem Nutgrund und die andere Dichtlippe als dynamische Dichtlippe mit einer radial angeordneten dynamischen Dichtfläche zur dynamisch abdichtenden Anlage an der anderen Gerätekomponente ausgebildet ist. Bei dem fluidtechnischen Gerät handelt es sich insbesondere um ein Ventil oder um einen fluidbetätigten Arbeitszylinder.

Ein derartiges fluidtechnisches Gerät mit zugehörigem Dichtungsring ist aus der EP 1795786 B1 bekannt. Das bekannte fluidtechnische Gerät, beispielsweise ein Ventil oder ein Arbeitszylinder, verfügt über zwei einander umschließende und relativ zueinander linear bewegbare Gerätekomponenten, beispielsweise ein Gehäuse und einen in dem Gehäuse verschiebbar angeordneten Kolben. Die beiden Gerätekomponenten sind mittels eines Dichtungsrings gegeneinander abgedichtet, der in einer radial offenen Haltenut der einen Gerätekomponente angeordnet ist und der zwei Dichtlippen aufweist. Eine der Dichtlippen fungiert als statische Dichtlippe und hat eine radial angeordnete statische Dichtfläche zur statisch dichtenden Anlage am Nutgrund der Haltenut. Die andere Dichtlippe fungiert als dynamische Dichtlippe und verfügt über eine radial angeordnete dynamische Dichtfläche, die an der anderen Gerätekomponente anliegt und an dieser unter Gewährleistung eines dynamischen Dichtkontaktes abgleitet, wenn die beiden Gerätekomponenten relativ zueinander verschoben werden.

Der bekannte Dichtungsring dichtet in solchen Fällen optimal ab, in denen er von der Vorderseite her mit einem fluidischen Druckmedium beaufschlagt wird. Das Druckmedium gelangt dann in eine konzentrisch zwischen den beiden Dichtlippen ausgebildete Ringnut und drückt die beiden Dichtlippen radial auseinander und gegen die jeweils unmittelbar benachbarte Gerätekomponente. Für eine Abdichtung bei rückseitiger Fluiddruckbeaufschlagung ist der bekannte Dichtungsring jedoch nicht geeignet. Ist auch in dieser Richtung eine Abdichtung gewünscht, bedarf es des Einbaus eines weiteren Dichtungsrings mit zu dem beschriebenen Dichtungsring spiegelbildlicher Ausrichtung. Damit verbunden ist jedoch der Nachteil eines erhöhten Platzbedarfes mit entsprechend notwendiger Vergrößerung des fluidtechnischen Gerätes. Außerdem ergibt sich aufgrund der damit verbundenen zusätzlichen dynamischen Dichtstelle eine erhöhte Reibung, was den zum Hervorrufen der Relativbewegung zwischen den beiden Gerätekomponenten erforderlichen Kraftbedarf erhöht.

Aus der EP 0 889 265 A1 ist ein fluidtechnisches Gerät bekannt, bei dem in einer eine Stange umgebende Einbaunut eine Stangendichtung angeordnet ist, die mit einer dynamisch dichtenden Dichtlippe eine translatorisch bewegbare Stange umschließt und die eine statisch wirkende Dichtlippe aufweist, die am Nutgrund der Einbaunut mit radialer Vorspannung dichtend anliegt.

Der Erfindung liegt die Aufgabe zugrunde, Maßnahmen vorzuschlagen, um unabhängig von der axialen Beaufschlagungsrichtung eine zuverlässige, platzsparende und reibungsarme Abdichtung zwischen zwei relativ zueinander linear bewegbaren Gerätekomponenten zu ermöglichen.

Zur Lösung dieser Aufgabe ist bei einem fluidtechnischen Gerät der eingangs genannten Art vorgesehen, dass die statische Dichtlippe stirnseitig eine der vorderen Nutflanke axial zugewandte zweite statische Dichtfläche aufweist und die vordere Nutflanke axial vor eine stirnseitige Abstützfläche der dynamischen Dichtlippe ragt, wobei die beiden Dichtlippen in ihren Abmessungen derart aufeinander abgestimmt sind, dass im rückseitig unbeaufschlagten Zustand des Dichtungsringes der axiale Abstand zwischen der Abstützfläche und der vorderen Nutflanke größer ist als der axiale Abstand zwischen der zweiten statischen Dichtfläche und der vorderen Nutflanke, und wobei die dynamische Dichtlippe über eine größere Steifigkeit als die statische Dichtlippe verfügt, wobei der Dichtungsring bei rückseitiger Fluidbeaufschlagung unter Beibehaltung des dynamischen Dichtkontaktes seiner dynamischen Dichtlippe in Richtung zu der vorderen Nutflanke verschoben ist und mit der Abstützfläche der dynamischen Dichtlippe an der vorderen Nutflanke der Haltenut anliegt, wobei die statische Dichtlippe unter elastischer Verformung mit ihrer zweiten statischen Dichtfläche dichtend an der vorderen Nutflanke anliegt.

Auf diese Weise kann mit einem einzigen Dichtungsring gewährleistet werden, dass unabhängig von der axialen Fluidbeaufschlagungsrichtung eine zuverlässige Abdichtung zwischen den beiden relativ zueinander bewegbaren Gerätekomponenten vorliegt. Der Dichtungsring weist an seiner zur statischen Abdichtung dienenden statischen Dichtlippe zwei unterschiedlich orientierte statische Dichtflächen auf, von denen die eine, erste statische Dichtfläche für einen Dichtkontakt mit dem Nutgrund und die andere, zweite statische Dichtfläche für einen Dichtkontakt mit der vorderen Nutflanke einer den Dichtungsring festhaltenden Haltenut vorgesehen ist. Wird der Dichtungsring von seiner Vorderseite her mit einem fluidischen Druckmedium beaufschlagt, ist die radial orientierte erste statische Dichtfläche wirksam. Bei entgegengesetzter, rückseitiger Fluidbeaufschlagung ist die stirnseitig an der statischen Dichtlippe angeordnete zweite statische Dichtfläche wirksam, die durch den rückseitig auf den Dichtungsring einwirkenden Fluiddruck an die vordere Nutflanke angepresst wird. Auf diese Weise ist eine statische Abdichtung selbst dann gewährleistet, wenn die statische Dichtlippe und mithin deren erste statische Dichtfläche aufgrund einer geringen Struktursteifigkeit vom Nutgrund der Haltenut abheben sollte. Im Bereich der dynamischen Dichtlippe ist unabhängig von der Fluidbeaufschlagungsrichtung stets die einzige vorhandene dynamische Dichtfläche für die dynamische Abdichtung verantwortlich, da sie aufgrund der höheren Steifigkeit der dynamischen Dichtlippe nicht nur bei einer von vorne her erfolgenden Fluidbeaufschlagung, sondern auch bei einer rückseitigen Fluidbeaufschlagung an der anderen Gerätekomponente dichtend anliegt. Bei rückseitiger Fluidbeaufschlagung ergibt sich ein besonderer Abstützeffekt für die dynamische Dichtlippe bezüglich der die Haltenut aufweisenden Gerätekomponente, weil sich die dynamische Dichtlippe mit ihrer Abstützfläche an der vorderen Nutflanke der Haltenut abstützen kann und dadurch zusätzlich von der die Haltenut aufweisenden Gerätekomponente so abgestützt wird, dass ihre dynamische Dichtfläche nicht von der abzudichtenden Gerätekomponente abhebt. Aufgrund des unterschiedlich großen axialen Abstandes zwischen der vorderen Nutflanke und einerseits der zweiten statischen Dichtfläche sowie andererseits der Abstützfläche kann in Bezug auf die statische Abdichtung eine hohe Dichtkraft erzeugt werden, weil die statische Dichtlippe durch Anlage an der vorderen Nutflanke, insbesondere axial, elastisch verformt und insbesondere gestaucht wird, bis die dynamische Dichtlippe mit ihrer Abstützfläche an der vorderen Nutflanke zur Anlage gelangt.

Die besondere Ausgestaltung des Dichtungsringes ermöglicht es, mit nur einer einzigen dynamischen Dichtstelle eine dynamische Abdichtung gegen von unterschiedlichen axialen Richtungen her wirkende Fluiddrücke zu gewährleisten. Es werden also zum Erhalt der axial beidseitigen Abdichtfunktion nicht mehrere Dichtungsringe benötigt, sondern es genügt ein einziger erfindungsgemäß ausgebildeter Dichtungsring. Dementsprechend wird zur Realisierung der Abdichtungsfunktionalität ein nur geringer Einbauraum benötigt und auch die im Betrieb auftretende Reibung bleibt auf geringem Niveau.

Vorteilhafte Weiterbildungen der Erfindung gehen aus den Unteransprüchen hervor.

Bei einem erfindungsgemäßen Gerät lassen sich die unterschiedlichen axialen Abstände zwischen den Stirnseiten der beiden Dichtungsringe und der vorderen Nutflanke sehr einfach dadurch realisieren, dass die statische Dichtlippe eine derart größere Länge als die dynamische Dichtlippe hat, dass sie im rückseitig unbeaufschlagten Zustand des Dichtungsringes axial über die dynamische Dichtlippe vorsteht. Die gegenüberliegende vordere Nutflanke der Haltenut kann in diesem Fall sehr einfach als sich in einer bezüglich der Hauptachse rechtwinkeligen Radialebene erstreckende ebene Ringfläche ausgebildet sein. Somit kann die Haltenut kostengünstig mit einem rechteckigen Querschnitt hergestellt werden.

Um die für die Dichtfunktion angestrebte axiale Beweglichkeit des Dichtungsringes bezüglich der sie tragenden Gerätekomponente optimal zu gewährleisten, ist es von Vorteil, wenn der Dichtungsring insgesamt mit axialem Bewegungsspielraum in der Haltenut angeordnet ist und hierzu seine axialen Abmessungen kleiner sind als die in Achsrichtung der Hauptachse gemessene Nutbreite der Haltenut.

Die statische Dichtfunktion wird begünstigt, wenn die statische Dichtlippe über eine derartige Elastizität verfügt, dass sie bei rückseitiger Fluidbeaufschlagung des Dichtungsringes aufgrund ihrer stirnseitigen Abstützung derart verformt wird, dass sie mit der ersten statischen Dichtfläche vom Nutgrund der Haltenut abhebt. Dies kann ein angestrebtes Anpressen der Stirnseite der statischen Dichtlippe gegen die vordere Nutflanke begünstigen und zu besonders hohen Dichtkräften führen.

Die Rückfläche des Dichtungsringes dient insbesondere zur Abstützung des Dichtungsringes an der hinteren Nutflanke bei von der Vorderseite des Dichtungsringes her erfolgender Fluidbeaufschlagung. Durch diese rückseitige Abstützung des Dichtungsringes ist das von vorne her auf den Dichtungsring einwirkende Fluid in der Lage, in dem zwischen den beiden Dichtlippen angeordneten Zwischenraum optimal radial auf die Dichtlippen einzuwirken, so dass sie mit Fluidkraftunterstützung an die jeweils zugeordnete Gerätekomponente mit hoher Dichtkraft andrückbar sind.

Vorzugsweise verfügt die dynamische Dichtlippe zum Erhalt der größeren Steifigkeit über eine größere maximale Dicke als die statische Dichtlippe. Besonders zweckmäßig ist es, wenn die dynamische Dichtlippe im Übergangsbereich zu dem Tragabschnitt des Dichtungsringes über eine größere Dicke verfügt als die statische Dichtlippe in ihrem Übergangsbereich zu dem Tragabschnitt.

Die dynamische Dichtlippe hat radial zweckmäßigerweise eine im Querschnitt gesehen wulstartige Erhebung, die die dynamische Dichtfläche definiert.

Zwischen den beiden Dichtlippen befindet sich zweckmäßigerweise eine konzentrisch angeordnete, zur vorderen Nutflanke hin offene Ringnut, die insbesondere einen sich in Richtung zu der vorderen Nutfläche hin erweiternden Querschnitt aufweist.

Insbesondere um eine gleichmäßige Fluiddruckunterstützung bei beiden axialen Fluidbeaufschlagungsrichtungen zu erzielen, ist es von Vorteil, wenn das Verhältnis, also der Quotient zwischen dem zwischen dem Nutgrund der Ringnut und der dynamischen Dichtfläche gemessenen axialen Abstand (A) und dem zwischen der dynamischen Dichtfläche und der Abstützfläche der dynamischen Dichtlippe gemessenen axialen Abstand (C) im Bereich von 0,1 - 10 und vorzugsweise im Bereich von 0,2 - 5 liegt. Diese Bereichsangaben verstehen sich jeweils einschließlich der genannten Bereichsgrenzen. Unter dem axialen Abstand ist der in Achsrichtung der Hauptachse gemessene Abstand zu verstehen.

Um eine besonders sichere Verformung der statischen Dichtlippe bei rückseitiger Fluiddruckbeaufschlagung zu gewährleisten, ist es vorteilhaft, wenn das Verhältnis beziehungsweise der Quotient zwischen dem zwischen dem Nutgrund der Ringnut und der dynamischen Dichtfläche gemessenen axialen Abstand (A) und der Summe aus diesem axialen Abstand (A) und dem zwischen der dynamischen Dichtfläche und der ersten statischen Dichtfläche gemessenen axialen Abstand (B) in einem Bereich von 0,1 - 1 und vorzugsweise in einem Bereich von 0,2 - 0,5 liegt. Auch hier verstehen sich die Bereichsangaben jeweils einschließlich der Bereichsgrenzen und der axiale Abstand bezieht sich auf die Achsrichtung der eingangs zitierten Hauptachse.

Zweckmäßigerweise sind bei dem Dichtungsring sowohl die für die gleichmäßige Druckunterstützung in beiden Fluiddruckrichtungen als auch die für die sichere Verformung der statischen Dichtlippe bei rückseitiger Fluiddruckbeaufschlagung als vorteilhaft angesehenen vorgenannten geometrischen Angaben kombinatorisch erfüllt.

Das fluidtechnische Gerät kann so ausgebildet sein, dass die die Haltenut aufweisende Gerätekomponente an ihrem Außenumfang die Haltenut aufweist und von der anderen Gerätekomponente umschlossen ist. Eine solche Ausgestaltung ist vorteilhaft in Verbindung mit einem als Ventil oder als fluidbetätigter Arbeitszylinder ausgebildeten fluidtechnischen Gerät, bei dem die die Haltenut aufweisende Gerätekomponente insbesondere ein gleitverschieblich in der anderen Gerätekomponente angeordneter Kolben ist. Hierbei kann es sich vorzugsweise um einen Antriebskolben handeln, der zur Hervorrufung einer Linearbewegung von axial entgegengesetzten Seiten her fluidbeaufschlagbar ist. Der Antriebskolben dient beispielsweise dazu, ein Ventilglied oder ein Stellglied eines Arbeitszylinders anzutreiben.

Ebenso ist eine Ausgestaltung des fluidtechnischen Gerätes dahingehend möglich, dass die die Haltenut aufweisende Gerätekomponente die andere Gerätekomponente umschließt und an ihrem dieser anderen Gerätekomponente zugewandten Innenumfang die zur Aufnahme des Dichtungsringes dienende Haltenut aufweist. Ein solcher Aufbau ist wiederum beispielsweise sowohl bei einem Ventil oder bei einem fluidbetätigten Arbeitszylinder realisierbar. In Verbindung mit einem fluidbetätigten Arbeitszylinder kann eine solche Konstellation beispielsweise zur Abdichtung einer Kolbenstange genutzt werden.

Die erfindungsgemäße Maßnahme ist immer dann von besonderem Vorteil, wenn durch den Dichtungsring zwei Räume axial voneinander abgetrennt werden, zwischen denen Differenzdrücke mit unterschiedlichen Vorzeichen wirksam sind, so dass entweder eine resultierende Fluiddruckbeaufschlagung von der Vorderseite oder von der Rückseite des Dichtungsringes her stattfindet. Beispielsweise kann auf diese Weise eine Abdichtung gegen wechselnde Überdrücke stattfinden. Eine abzudichtende Druckdifferenz kann auch daraus resultieren, dass auf einer Seite des Dichtungsringes ein Unterdruck herrscht.

Die erfindungsgemäßen Maßnahmen sind unabhängig davon realisierbar, ob sich die Haltenut an einer im Betrieb des zugeordneten fluidtechnischen Gerätes ortsfesten Gerätekomponente oder einer beweglichen Komponente befindet.

Nachfolgend wird die Erfindung anhand der beiliegenden Zeichnung näher erläutert. In dieser zeigen:
- Figur 1: einen Ausschnitt eines fluidtechnischen Gerätes im Bereich zweier relativ zueinander linear zu bewegender Gerätekomponenten im Längsschnitt, wobei ein axial beidseits druckloser Einbauzustand eines erfindungsgemäßen Dichtungsringes gezeigt ist,
- Figur 2: die Anordnung aus Figur 1 im Zustand einer von der Vorderseite her erfolgenden Fluiddruckbeaufschlagung des Dichtungsringes,
- Figur 3: die Anordnung aus Figur 1 im Zustand einer von der Rückseite her erfolgenden Fluiddruckbeaufschlagung des Dichtungsringes, und
- Figur 4: in einer der Figur 1 entsprechenden Darstellungsweise eine weitere Ausführungsform des fluidtechnischen Gerätes und eines Dichtungsringes, wobei die den Dichtungsring aufnehmende Haltenut im Gegensatz zum Ausführungsbeispiel der Figuren 1 bis 3 nicht an der von einer weiteren Gerätekomponente umschlossenen Gerätekomponente ausgebildet ist, sondern an der eine weitere Gerätekomponente umschließenden Gerätekomponente.

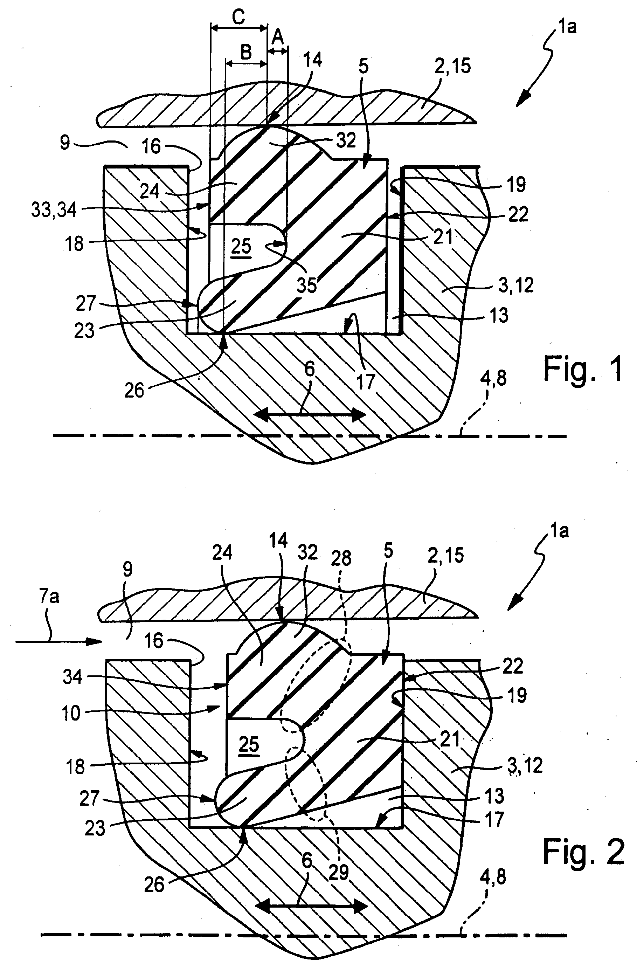

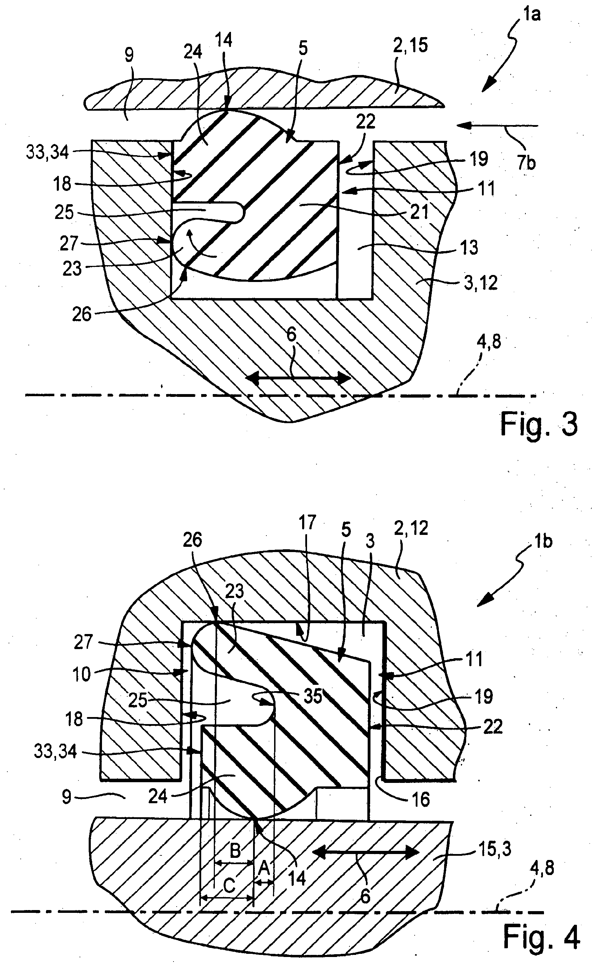

In der Zeichnung illustrieren die Figuren 1 bis 3 Ausschnitte eines vorzugsweise als Ventil ausgebildeten fluidtechnischen Gerätes 1a, während die Figur 4 einen Ausschnitt eines als fluidbetätigter Arbeitszylinder und hierbei insbesondere als Pneumatikzylinder ausgebildeten fluidtechnischen Gerätes 1b zeigt. In beiden Gerätearten ist die erfindungsgemäße Abdichtungsmaßnahme verwirklicht. Es versteht sich, dass diese Abdichtungsmaßnahme auch bei anderen Arten fluidtechnischer Geräte realisierbar ist.

Jedes fluidtechnische Gerät 1a, 1b verfügt über eine während ihres Betriebes in der Regel ortsfeste erste Gerätekomponente 2. Bei ihr handelt es sich beispielsweise um ein Gehäuse oder um eine gehäusefeste Komponente des betreffenden fluidtechnischen Gerätes 1a, 1b.

Ferner enthält jedes fluidtechnische Gerät 1a, 1b eine während seines Betriebes relativ zu der ersten Gerätekomponente 2 entlang einer Hauptachse 4 linear bewegbare zweite Gerätekomponente 3. Beim Ausführungsbeispiel der Figuren 1 bis 3 ist die zweite Gerätekomponente 3 vom Antriebskolben eines Ventilschiebers gebildet, beim Ausführungsbeispiel der Figur 4 von der mit einem nicht näher dargestellten Kolben verbundenen Kolbenstange eines Arbeitszylinders.

In allen gezeigten Fällen ist die zweite Gerätekomponente 3 von der ersten Gerätekomponente 2 umschlossen, und zwar insbesondere in bezüglich der Hauptachse 4 koaxialer Anordnung.

Zwischen den beiden Gerätekomponenten 2, 3 befindet sich ein ringförmiger radialer Zwischenraum 9, der bezüglich der Hauptachse 4 konzentrisch angeordnet ist. Der radiale Zwischenraum 9 umschließt die zweite Gerätekomponente 3 und wird seinerseits von der ersten Gerätekomponente 2 umschlossen. Konzentrisch zwischen den beiden Gerätekomponenten 2, 3 ist ein Dichtungsring 5 angeordnet, der den radialen Zwischenraum 9 unter Abdichtung überbrückt.

Durch in Achsrichtung der Hauptachse 4 erfolgende Verlagerung der bewegbaren zweiten Gerätekomponente 3 relativ zur ortsfesten ersten Gerätekomponente 2 ist eine durch einen Doppelpfeil angedeutete lineare Relativbewegung 6 zwischen den beiden Gerätekomponenten 2, 3 hervorrufbar. Die hierzu erforderliche Antriebskraft wird als fluidische Antriebskraft aufgebracht und wirkt je nach gewünschter Bewegungsrichtung der bewegbaren zweiten Gerätekomponente 3 unter anderem mit einer ersten Fluidkraft 7a von einer axialen Vorderseite 10 her oder mit einer diesbezüglich entgegengesetzten zweiten Fluidkraft 7b von einer axialen Rückseite 11 her auf den an der bewegbaren zweiten Gerätekomponente 3 angeordneten Dichtungsring 5 ein. Die erste und zweite Fluidkraft 7a, 7b ist in Figuren 2 und 3 durch je einen Pfeil illustriert.

Je nach Typ des fluidtechnischen Gerätes 1a, 1b können die beiden Gerätekomponenten 2, 3 auch derart betrieben werden, dass die zweite Gerätekomponente 3 ortsfest bleibt und die Relativbewegung 6 durch eine Linearbewegung der ersten Gerätekomponente 2 hervorgerufen wird.

Jeweils eine der beiden Gerätekomponenten 2, 3 verfügt an der der jeweils anderen Gerätekomponente 3, 2 zugewandten Umfangsseite über eine ringförmige, bezüglich der Hauptachse 4 zweckmäßigerweise koaxiale Haltenut 13. Der Dichtungsring 5 ist in der Haltenut 13 zumindest partiell aufgenommen und gehalten. Die Haltenut 13 kann entweder an der ersten Gerätekomponente 2 oder an der zweiten Gerätekomponente 3 ausgebildet sein. Beim Ausführungsbeispiel der Figuren 1 bis 3 befindet sie sich am Außenumfang der von der ersten Gerätekomponente 2 umschlossenen zweiten Gerätekomponente 3. Beim Ausführungsbeispiel der Figur 4 befindet sie sich am Innenumfang der die zweite Gerätekomponente 3 außen umschließenden ersten Gerätekomponente 2.

Zur leichteren Beschreibung wird im Folgenden die jeweils mit der Haltenut 13 ausgestattete Gerätekomponente 2 oder 3 auch als Haltekomponente 12 bezeichnet. Somit ist beim Ausführungsbeispiel der Figuren 1 bis 3 die Haltekomponente 12 von der zweiten Gerätekomponente 3 gebildet und beim Ausführungsbeispiel der Figur 4 von der ersten Gerätekomponente 2.

Da beim Ausführungsbeispiel der Figuren 1 bis 3 die zweite Gerätekomponente 3 bezüglich der ersten Gerätekomponente 2 bewegbar ist, führt der Dichtungsring 5 im Rahmen der Relativbewegung 6 eine entsprechende axiale Relativbewegung bezüglich der ersten Gerätekomponente 2 aus. Während des Betriebes des fluidtechnischen Gerätes 1a wird also der Dichtungsring 5 in Achsrichtung der Hauptachse 4 relativ zur ersten Gerätekomponente 2 verlagert.

Im Unterschied dazu bleibt beim Ausführungsbeispiel der Figur 4 der in der Haltenut 13 der ersten Gerätekomponente 2 fixierte Dichtungsring 5 während des Betriebes des fluidtechnischen Gerätes 1b ortsfest, wobei die zweite Gerätekomponente 3 diesbezüglich eine Linearbewegung ausführt.

Der Dichtungsring 5 verfügt über eine radial orientierte, bezüglich seiner Längsachse 8 konzentrische dynamische Dichtfläche 14, mit der er an der relativ zu ihm bewegbaren Gerätekomponente ständig unter Abdichtung gleitverschieblich anliegt. Es handelt sich hierbei um die nicht mit der Haltenut 13 versehene Gerätekomponente, die, lediglich zur besseren Unterscheidung, im Folgenden auch als nutlose Gerätekomponente 15 bezeichnet wird. Beim Ausführungsbeispiel der Figuren 1 bis 3 bildet die erste Gerätekomponente 2 die nutlose Gerätekomponente 15, während beim Ausführungsbeispiel der Figur 4 die zweite Gerätekomponente 3 die nutlose Gerätekomponente 15 bildet.

Die Haltenut 13 ist als bezüglich der Hauptachse 4 konzentrische Ringnut ausgebildet und hat eine radial orientierte, der nutlosen Gerätekomponente 15 zugewandte Nutöffnung 16. Beim Ausführungsbeispiel der Figuren 1 bis 3 ist sie radial nach außen orientiert, beim Ausführungsbeispiel der Figur 4 radial nach innen.

Die Haltenut 13 hat außerdem einen radial in Richtung der zugehörigen Nutöffnung 16 orientierten Nutgrund 17, der beim Ausführungsbeispiel der Figuren 1 bis 3 radial nach außen und beim Ausführungsbeispiel der Figur 4 radial nach innen orientiert ist. Es handelt sich bei dem Nutgrund 17 um eine bevorzugt kreiszylindrische Fläche, die die Grundfläche der Haltenut 13 bildet.

Außerdem verfügt die Haltenut 13 über zwei in Achsrichtung der Hauptachse 4 einander zugewandte und mit Abstand zueinander angeordnete Nutflanken, die im Folgenden als vordere Nutflanke 18 und hintere Nutflanke 19 bezeichnet werden. Beide Nutflanken 18, 19 sind Ringflächen.

Zu Gunsten einer einfachen Fertigung der Haltenut 13 sind beide Nutflanken 18, 19 zweckmäßigerweise als ebene Flächen mit bezüglich der Hauptachse 4 radialer Ausrichtung ausgebildet, so dass sie mit anderen Worten jeweils in einer Radialebene bezüglich der Hauptachse 4 verlaufen. Auf diese Weise kann die Haltenut 13 insbesondere über einen aus der Zeichnung ersichtlichen Rechteckquerschnitt verfügen.

Der Dichtungsring 5 verfügt über einen zu der Hauptachse 4 konzentrischen, ringförmigen Tragabschnitt 21, der eine der hinteren Nutflanke 19 zugewandte und gegenüberliegende axiale Rückfläche 22 des Dichtungsrings bildet. Diese Rückfläche 22 erstreckt sich zweckmäßigerweise in einer bezüglich der Hauptachse 4 radialen Ebene.

Nebenbei bemerkt, fällt die Hauptachse 4 bei in der Haltenut 13 montiertem Dichtungsring 5 zweckmäßigerweise mit der Längsachse 8 des Dichtungsringes 5 zusammen.

Der Dichtungsring verfügt außerdem über zwei einander konzentrisch umschließende und dabei mit radialem Abstand zueinander angeordnete ringförmige Dichtlippen, die aufgrund ihrer Funktion im Folgenden als statische Dichtlippe 23 und als dynamische Dichtlippe 24 bezeichnet seien. Diese Bezeichnungen werden zur besseren Unterscheidung verwendet, weil die statische Dichtlippe 23 zur statischen Abdichtung und die dynamische Dichtlippe 24 zur dynamischen Abdichtung eingesetzt wird.

Der Tragabschnitt 21 trägt die beiden Dichtlippen 23, 24. Vorzugsweise sind der Tragabschnitt 21 und die beiden Dichtlippen 23, 24 einstückig miteinander ausgebildet. Es ist besonders vorteilhaft, wenn der Dichtungsring 5 insgesamt als einstückiger Körper aufgebaut ist, der aus einem Material mit gummielastischen Eigenschaften besteht. Ein solches Material verfügt über sehr gute Dichteigenschaften und kann sich optimal an den abzudichtenden Dichtpartner anschmiegen.

Die beiden Dichtlippen 23, 24 ragen ausgehend von dem rückseitigen Tragabschnitt 21 in Richtung zur Vorderseite 10 des Dichtungsringes 5 beziehungsweise in Richtung zur vorderen Nutflanke 18. Konzentrisch zwischen den beiden Dichtlippen 23, 24 ist zweckmäßigerweise eine zu der Vorderseite 10 beziehungsweise zur vorderen Nutflanke 18 hin offene Ringnut 25 ausgebildet, die der statischen Dichtlippe 23 einen radialen Verformungsspielraum bietet und die außerdem zur Druckunterstützung bei der Abdichtung beiträgt. Die Ringnut 25 hat zweckmäßigerweise im Querschnitt gesehen einen sich in Richtung zu der vorderen Nutflanke 18 hin erweiternden Querschnitt.

Von den beiden Dichtlippen 23, 24 ist die statische Dichtlippe 23 benachbart zum Nutgrund 17 angeordnet und die dynamische Dichtlippe 24 benachbart zu der Nutöffnung 16. Beim Ausführungsbeispiel der Figuren 1 bis 3 liegt mithin die statische Dichtlippe 23 radial innerhalb der dynamischen Dichtlippe 24, während sie beim Ausführungsbeispiel der Figur 4 radial außerhalb der dynamischen Dichtlippe 24 angeordnet ist.

An der dynamischen Dichtlippe 24 ist die oben schon erwähnte dynamische Dichtfläche 14 radial an der der statischen Dichtlippe 23 entgegengesetzten radialen Seite angeordnet. Die Angabe "radial" bezieht sich auf die Hauptachse 4 beziehungsweise die Längsachse 8 des Dichtungsringes 5. Jedenfalls befindet sich die dynamische Dichtfläche 14 somit an der im montierten Zustand des Dichtungsringes 5 der nutlosen Gerätekomponente 15 zugewandten Umfangsseite des Dichtungsringes 5. Beim Ausführungsbeispiel der Figuren 1 bis 3 ist dies der Außenumfang und beim Ausführungsbeispiel der Figur 4 der Innenumfang des Dichtungsringes 5.

Mit der dynamischen Dichtfläche 14 liegt die dynamische Dichtlippe 24 bei montiertem Dichtungsring 5 ständig radial unter Abdichtung gleitverschieblich an der nutlosen Gerätekomponente 15 an. Da die dynamische Dichtlippe 24 mit ihrer dynamischen Dichtfläche 14 bei der Relativbewegung 6 an der nutlosen Gerätekomponente 15 abgleitet, kann der hierbei vorliegende Kontakt als dynamischer Dichtkontakt bezeichnet werden.

Die statische Dichtlippe 23 hat zwei zur statischen Abdichtung gegenüber der Haltekomponente 12 dienende erste und zweite statische Dichtflächen 26, 27. Die erste statische Dichtfläche 26 befindet sich an der der dynamischen Dichtlippe 24 radial entgegengesetzten Seite der statischen Dichtlippe 23 und ist bei montiertem Dichtungsring 5 dem Nutgrund 17 der Haltenut 13 zugewandt. Folglich ist sie beim Ausführungsbeispiel der Figuren 1 bis 3 am Innenumfang und beim Ausführungsbeispiel der Figur 4 am Außenumfang des Dichtungsringes 5 platziert.

Die zusätzlich zu der ersten statischen Dichtfläche 26 vorhandene zweite statische Dichtfläche 27 ist an der nach vorne weisenden Stirnseite der statischen Dichtlippe 23 angeordnet und somit bei montiertem Dichtungsring 5 der vorderen Nutflanke 18 axial zugewandt. Wie die erste statische Dichtfläche 26 ist auch die zweite statische Dichtfläche 27 eine Ringfläche, die allerdings axial orientiert ist, während die erste statische Dichtfläche 26 radial orientiert ist. Die die beiden statischen Dichtflächen 26, 27 bildenden Bereiche der statischen Dichtlippe 23 sind im Querschnitt gesehen zweckmäßigerweise konvex gewölbt.

Die ringförmige statische Dichtlippe 23 erstreckt sich ausgehend von dem Tragabschnitt 21 zweckmäßigerweise mit einer konischen Konfiguration in Richtung zu der stirnseitigen zweiten statischen Dichtfläche 27, wobei sie sich bei der Anordnung gemäß Figuren 1 bis 3 insgesamt konisch verjüngt und beim Ausführungsbeispiel der Figur 4 insgesamt konisch erweitert.

Die dynamische Dichtlippe 24 geht in einem ersten Übergangsbereich 28 insbesondere einstückig in den rückseitigen Tragabschnitt 21 über. Die statische Dichtlippe 23 schließt in einem zweiten Übergangsbereich 29 an den Tragabschnitt 21 an. Die beiden Übergangsbereiche 28, 29 sind in Figur 2 zur besseren Erkennbarkeit gestrichelt umrahmt markiert.

Insgesamt hat die dynamische Dichtlippe 24 eine größere Steifigkeit als die statische Dichtlippe 23. Während die statische Dichtlippe 23 mit relativ geringem Kraftaufwand radial elastisch verformbar ist, weist die dynamische Dichtlippe 24 eine sich einer elastischen radialen Verformung stark widersetzende Struktursteifigkeit auf.

Um diese unterschiedlichen Steifigkeiten zu realisieren, ist es von Vorteil, wenn die dynamische Dichtlippe 24 in dem ersten Übergangsbereich 28 über eine größere Dicke verfügt als die statische Dichtlippe 23 in dem zweiten Übergangsbereich 29. Es ist außerdem von Vorteil, wenn die dynamische Dichtlippe 24 bzw. deren ringförmiger Lippenkörper insgesamt über eine größere maximale Dicke verfügt als die statische Dichtlippe 23 bzw. deren ringförmiger Lippenkörper.

Exemplarisch hat die statische Dichtlippe 23 über ihre im Querschnitt betrachtete Länge hinweg eine zweckmäßigerweise zumindest im Wesentlichen konstante Dicke. Die dynamische Dichtlippe 24 hat vorzugsweise eine sich verändernde Dicke, wobei der Bereich maximaler Dicke durch eine radial angeordnete wulstartige Erhebung 32 definiert wird, deren konvexer Scheitelpunkt vorzugsweise die dynamische Dichtfläche 14 definiert. Die wulstartige Erhebung 32 ist ringförmig und konzentrisch zu der dynamischen Dichtlippe 24 ausgebildet, wobei sie sich beim Ausführungsbeispiel der Figuren 1 bis 3 am Außenumfang und beim Ausführungsbeispiel der Figur 4 am Innenumfang der dynamischen Dichtlippe 24 befindet.

Es ist weiterhin von Vorteil, wenn die beiden Dichtlippen 23, 24 derart aufeinander abgestimmt sind, dass die statische Dichtlippe 23 die dynamische Dichtlippe 24 im Bereich der Vorderseite 10 axial überragt. Denkt man sich also eine bezüglich der Hauptachse 4 radiale Ebene, die die der vorderen Nutflanke 18 zugewandte vordere Stirnfläche 33 der dynamischen Dichtlippe 24 enthält, ragt die statische Dichtlippe 23 ein Stückweit über diese radiale Ebene hinaus. Somit ist die zweite statische Dichtfläche 27 der vorderen Stirnfläche 33 der dynamischen Dichtlippe 24 mit Abstand vorgelagert. Dies gilt allerdings nur, solange der Dichtungsring 5 nicht aufgrund einer zweiten Fluidkraft 7b in Richtung der vorderen Nutflanke 18 beaufschlagt und an die vordere Nutflanke 18 angepresst ist.

Man kann mit anderen Worten sagen, dass die statische Dichtlippe 23 eine derart größere Länge als die dynamische Dichtlippe 24 hat, dass sie im rückseitig fluidisch unbeaufschlagten Zustand des Dichtungsringes 5 axial über die dynamische Dichtlippe 24 vorsteht.

An dieser Stelle sei erwähnt, dass die vordere Stirnfläche 33 der statischen Dichtlippe 23 eine zum abstützenden Zusammenwirken mit der vorderen Nutflanke 18 vorgesehene Abstützfläche 34 bildet. Es handelt sich bei der Abstützfläche 34 zweckmäßigerweise um eine ebene Ringfläche, die in einer bezüglich der Hauptachse 4 rechtwinkeligen Radialebene verläuft.

Wenn der Dichtungsring 5 in der Haltenut 13 montiert ist, erstreckt sich die vordere Nutflanke 18 sowohl in einen der zweiten statischen Dichtfläche 27 axial vorgelagerten Bereich als auch in einen der Abstützfläche 34 axial vorgelagerten Bereich.

Es ist weiterhin zweckmäßig, die axialen Abmessungen des Dichtungsringes 5 derart auf die in Achsrichtung der Hauptachse 4 gemessene Nutbreite der Haltenut 13 abzustimmen, dass der Dichtungsring 5 mit axialem Bewegungsspielraum in der Haltenut 13 angeordnet ist. Hierzu sind die maximalen axialen Abmessungen des Dichtungsringes 5 insbesondere kleiner als die Nutbreite der Haltenut 13.

Wenn der Dichtungsring 5 keiner ihn rückseitig beaufschlagenden zweiten Fluidkraft 7b ausgesetzt ist, kann er eine von der vorderen Nutflanke 18 gänzlich abgehobene Position einnehmen, wie sie in Figuren 1 und 4 illustriert ist. Es ist aber auch möglich, dass der Dichtungsring 5 hierbei mit seiner zweiten statischen Dichtfläche 27 an der vorderen Nutflanke 18 anliegt, wobei gleichzeitig aber ein axialer Abstand zwischen der Abstützfläche 34 der dynamischen Dichtlippe 24 und der vorderen Nutflanke 18 vorliegt. Jedenfalls ist im rückseitig unbeaufschlagten Zustand des Dichtungsringes 5 der axiale Abstand zwischen der Abstützfläche 34 und der vorderen Nutflanke 18 größer als der axiale Abstand zwischen der zweiten statischen Dichtfläche 27 und der vorderen Nutflanke 18, wobei dieser letztgenannte Abstand auch null betragen kann.

Wenn im Betrieb des fluidtechnischen Gerätes 1a, 1b eine erste Fluidkraft 7a auf die Vorderseite 10 des Dichtungsringes 5 einwirkt, wobei gleichzeitig keine rückseitige zweite Fluidkraft 7b ansteht oder eine solche zweite Fluidkraft 7b kleiner ist als die erste Fluidkraft 7a, wird der Dichtungsring 5 ausgehend von der in Figur 1 gezeigten unbeaufschlagten Neutralstellung innerhalb der Haltenut 13 nach rückwärts verschoben, bis er mit der Rückfläche 22 seines Tragabschnittes 21 an der hinteren Nutflanke 19 zur Anlage gelangt. Dieser Betriebszustand ist in Figur 2 illustriert. Hier wirkt das an der Vorderseite 10 zuströmende fluidische Druckmedium, beispielsweise Druckluft, jedoch nicht nur auf die vordere Stirnfläche des Dichtungsringes 5 ein, sondern beaufschlagt innerhalb der Ringnut 25 auch die beiden Dichtlippen 23, 24 in radialer Richtung im Sinne eines Aufspreizens. Dies hat zur Folge, dass die dynamische Dichtlippe 24 mit ihrer dynamischen Dichtfläche 14 verstärkt an die nutlose Gerätekomponente 15 angedrückt wird, während gleichzeitig die statische Dichtlippe 23 mit ihrer ersten statischen Dichtfläche 26 verstärkt an den Nutgrund 17 der Haltenut 13 angedrückt wird. Die Folge hiervon ist eine zuverlässige fluiddichte Abdichtung zwischen den axial beidseits des Dichtungsringes 5 angeordneten Bereichen des fluidtechnischen Gerätes 1a, 1b.

Wird hingegen der Dichtungsring 5 rückseitig mit einer zweiten Fluidkraft 7b beaufschlagt, während gleichzeitig keine oder eine kleinere erste Fluidkraft 7a von der Vorderseite her einwirkt, erfährt der Dichtungsring 5 eine Schubkraft in Richtung zur vorderen Nutflanke 18. Aufgrund des axialen Bewegungsspielraumes innerhalb der Haltenut 13 kann sich der Dichtungsring 5 hierbei innerhalb der Haltenut 13 axial in Richtung zur vorderen Nutflanke 18 verlagern, bis er mit seiner bis dahin noch beabstandet zur vorderen Nutflanke 18 angeordneten Abstützfläche 34 an der vorderen Nutflanke 18 zur Anlage gelangt. Dieser Betriebszustand ist in Figur 3 gezeigt. Während der axialen Relativbewegung zwischen dem Dichtungsring 5 und der Haltekomponente 12 bleibt die dynamische Dichtlippe 24 aufgrund der Dynamik ihrer Bewegung in gleitendem, das heißt dynamischem Dichtkontakt mit der nutlosen Gerätekomponente 15. Aber auch wenn der Dichtungsring 5 letztlich durch Abstützung an der vorderen Nutflanke 18 im Bereich seiner dynamischen Dichtlippe 24 einer verstärkten Fluidkraft ausgesetzt ist, bleibt dieser dynamische Dichtkontakt erhalten, weil die dynamische Dichtlippe 24 aufgrund der zwischen der Abstützfläche 34 und der vorderen Nutflanke 18 auftretenden Abstützung mechanisch an einem radialen Verschwenken und einem Abheben von der nutlosen Gerätekomponente 15 gehindert wird. Der abstützende Effekt unterstützt also die von Hause aus sehr biegesteif ausgelegte dynamische Dichtlippe 24 in der Beibehaltung des dynamischen Dichtkontaktes zu der nutlosen Gerätekomponente 15.

Beim axialen Verlagern des Dichtungsringes 5 in Richtung zur vorderen Nutflanke 18 stellt sich auch ein Wechsel der maßgeblichen statischen Abdichtwirkung ein, wobei die Dichtwirkung der ersten statischen Dichtfläche 26 vermindert oder gar aufgehoben wird, während die zweite statische Dichtfläche 27 ihre Dichtwirkung beginnt und/oder verstärkt.

Der Grund hierfür ist darin zu sehen, dass die statische Dichtlippe 23 beim in Richtung der vorderen Nutflanke 18 erfolgenden Verschieben des Dichtungsringes 5 zeitlich vor der Abstützfläche 34 an der vorderen Nutflanke 18 zur Anlage gelangt und bei der anschließenden Weiterbewegung des Dichtungsringes 5 unter Aufbau einer elastischen Gegenkraft elastisch verformt und axial gestaucht wird. Die Figur 3 zeigt die derart beaufschlagte und axial verformte bzw. gestauchte statische Dichtlippe 23, wobei sich die Verformung unter anderem in einem Verbiegen der statischen Dichtlippe 23 äußert.

Wenn daher der Dichtungsring 5 mit der Abstützfläche 34 an der vorderen Nutflanke 18 zur Anlage gelangt ist, drückt die statische Dichtlippe 23 aufgrund ihrer Komprimierung mit ihrer zweiten statischen Dichtfläche 27 sehr stark an die vordere Nutflanke 18 an. Auf diese Weise ergibt sich eine hohe Dichtkraft mit der Folge einer sicheren statischen Abdichtung.

Wie die Figur 3 illustriert, kann die statische Dichtlippe 23 ohne weiteres eine derartige Elastizität aufweisen, dass sie infolge der rückseitigen Fluidbeaufschlagung derart radial verformt wird, dass ihre erste statische Dichtfläche 26 vom Nutgrund der Haltenut 13 abgehoben wird. Somit kann bei rückseitig anstehender zweiter Fluidkraft 7b ohne weiteres axial durchgängig ein ringförmiger Freiraum zwischen dem Nutgrund 17 und dem Dichtungsring 5 vorliegen.

An dieser Stelle sei erwähnt, dass sich die geschilderte Funktionalität des elastischen axialen Verformens der statischen Dichtlippe 23 auch dadurch realisieren lässt, dass die beiden Dichtlippen 23, 24 stirnseitig auf gleicher axialer Höhe enden, wenn die vordere Nutflanke 18 über eine abgestufte Kontur verfügt, die für die oben geschilderte unterschiedliche axiale Beabstandung im rückseitig nicht mit Fluid beaufschlagten Zustand des Dichtungsringes 5 sorgt.

Wie die bisherigen Ausführungen zeigen, ist bei dem Dichtungsring 5 der Bereich der dynamischen Abdichtung steif gegenüber dem statischen Abdichtungsbereich ausgebildet. Somit wird der Dichtungsring 5 bei fluidischer Druckbeaufschlagung vorzugsweise im statischen Bereich verformt, also im Bereich der statischen Dichtlippe. Die dynamische Dichtlippe erfährt keine oder eine nur geringe Verformung.

Aufgrund der geschilderten Gestaltung der statischen Dichtlippe 23 ergibt sich bei rückseitiger Druckbeaufschlagung eine derartige Verformung beziehungsweise Verlagerung des Dichtungsringes, dass durch die stirnseitig an der statischen Dichtlippe 23 angeordnete zweite statische Dichtfläche 27 ein axialer Dichtungskontakt mit der vorderen Nutflanke 18 hervorgerufen wird.

Es ist von Vorteil, wenn der Dichtungsring 5 so ausgebildet ist, dass er bei beiden möglichen axialen Wirkungsrichtungen 7a, 7b der Fluidkraft eine gleichmäßige Druckunterstützung bei der Abdichtung erfährt. Eine zweckmäßige Ausgestaltung, um dies zu gewährleisten, zeichnet sich durch ein Verhältnis von "A" zu "C" - also A/C - aus, das im Bereich von 0,1 bis 10 und vorzugsweise im Bereich von 0,2 bis 5 liegt, wobei der Wert "A" den axialen Abstand zwischen dem zur Vorderseite 10 hin weisenden Nutgrund 35 der zwischen den beiden Dichtlippen 23, 24 angeordneten Ringnut 25 und der dynamischen Dichtfläche 14 bezeichnet und wobei der Wert "C" den axialen Abstand zwischen dieser dynamischen Dichtfläche 14 und der stirnseitig an der dynamischen Dichtlippe 24 ausgebildeten Abstützfläche 34 bezeichnet. Als "axialer Abstand" ist hierbei der in Achsrichtung der Hauptachse 4 beziehungsweise der damit zusammenfallenden Längsachse 8 des Dichtungsringes 5 gemessene Abstand zu verstehen. Die angegebenen Bereiche verstehen sich jeweils einschließlich der genannten Bereichsgrenzen.

Eine optimal sichere Verformung der statischen Dichtlippe 23 bei rückseitiger Fluidbeaufschlagung durch die zweite Fluidkraft 7b lässt sich insbesondere dann gewährleisten, wenn das Verhältnis zwischen "A" und der Summe aus "A" und "B" - also A/(A + B) - in einem Bereich von 0,1 bis 1 und vorzugsweise in einem Bereich von 0,2 bis 0,5 liegt, jeweils einschließlich der genannten Bereichsgrenzen. Der Wert "A" ist dabei der weiter oben bereits definierte axiale Abstand zwischen dem Nutgrund 35 der Ringnut 25 und der dynamischen Dichtfläche 14. Bei dem Wert "B" handelt es sich um den axialen Abstand, also um den wiederum in Achsrichtung der Hauptachse 4 beziehungsweise der damit zusammenfallenden Längsachse 8 des Dichtungsringes 5 gemessenen Abstand zwischen der dynamischen Dichtfläche 14 und der radialseitig an der statischen Dichtlippe 23 ausgebildeten ersten statischen Dichtfläche 26.

Die genannten Abstandswerte "A", "B" und "C" sind in Figuren 1 und 4 jeweils eingezeichnet.

Der besondere Vorteil des Dichtungsringes 5 besteht darin, dass er sowohl bei von vorne her wirkender erster Fluidkraft 7a als auch von hinten her wirkender zweiter Fluidkraft 7b eine zuverlässige Abdichtung sowohl im statischen als auch im dynamischen Bereich gewährleistet, so dass mit nur einem einzigen Dichtungsring 5 eine Abdichtung in beiden axialen Richtungen realisierbar ist. Mithin ist selbst bei im Betrieb des fluidtechnischen Gerätes 1a, 1b wechselnder Druckdifferenz eine sichere Abdichtung gewährleistet. Der Dichtungsring 5 ist vakuumtauglich, nimmt nur einen kleinen Einbauraum in Anspruch und verursacht wegen nur einer einzigen dynamischen Dichtstelle - im Bereich der dynamischen Dichtfläche 14 - nur geringe Reibung.

Der Dichtungsring 5 ist vorzugsweise so ausgelegt, dass er bereits im nicht mittels einer Fluidkraft 7a oder 7b beaufschlagten Zustand, also im drucklosen Zustand, aufgrund einer gewissen radialen Vorspannung sowohl am Nutgrund 17 der Haltenut 13 als auch an der der Haltenut 17 gegenüberliegenden Fläche der nutlosen Gerätekomponente 15 anliegt. Es ist also bereits im drucklosen Zustand eine gewisse radiale Dichtungsvorspannung gegeben. Auf diese Weise kann der Dichtungsring 5 seine Abdichtwirkung ohne kurzzeitige Leckage unmittelbar entfalten, wenn er von der Vorderseite 10 her oder von der Rückseite 11 her mit einem fluidischen Druckmedium beaufschlagt wird.

Gleichwohl sind die im drucklosen Zustand zwischen dem Dichtungsring 5 und den beiden Gerätekomponenten 2, 3 wirkenden Radialkräfte nicht besonders hoch, so dass die Reibung im drucklosen Zustand relativ gering ist. Aufgrund seiner in beiden Beaufschlagungsrichtungen wirksamen Dichtfunktion erfordert der Dichtungsring 5 bei seiner Montage überdies keine besondere Lageorientierung, was die Montage vereinfacht und Fehlerquellen bei der Montage ausschließt.

## Patentansprüche

1. Fluidtechnisches Gerät, mit zwei in Richtung einer Hauptachse (4) relativ zueinander linear bewegbaren Gerätekomponenten (2,3), von denen die eine Gerätekomponente (2, 3) die andere Gerätekomponente (3,2) umschließt und zwischen denen ein zu der Hauptachse (4) koaxialer Dichtungsring (5) angeordnet ist, der in einer radial offenen und einen radial orientierten Nutgrund (17) sowie eine hintere und eine vordere Nutflanke (19, 18) aufweisenden ringförmigen Haltenut (13) der einen Gerätekomponente (2, 3) gehalten ist und der einen Tragabschnitt (21) mit einer der hinteren Nutflanke (19) zugewandten axialen' Rückfläche (22) sowie zwei von dem Tragabschnitt (21) wegragende und konzentrisch zueinander angeordnete und axial in Richtung zu der vorderen Nutflanke (18) ragende Dichtlippen (23, 24) aufweist, wobei die dem Nutgrund (17) benachbarte Dichtlippe als statische Dichtlippe (23) mit einer radial angeordneten ersten statischen Dichtfläche (26) zur statisch abdichtenden Anlage an dem Nutgrund (17) und die andere Dichtlippe als dynamische Dichtlippe (24) mit einer radial angeordneten dynamischen Dichtfläche (14) zur dynamisch abdichtenden Anlage an der anderen Gerätekomponente (3, 2) ausgebildet ist, **dadurch gekennzeichnet, dass** die statische Dichtlippe (23) stirnseitig eine der vorderen Nutflanke (18) axial zugewandte zweite statische Dichtfläche (27) aufweist und die vordere Nutflanke (18) axial vor eine stirnseitige Abstützfläche (34) der dynamischen Dichtlippe (24) ragt, wobei die beiden Dichtlippen (23, 24) in ihren Abmessungen derart aufeinander abgestimmt sind, dass im rückseitig unbeaufschlagten Zustand des Dichtungsringes (5) der axiale Abstand zwischen der Abstützfläche (34) und der vorderen Nutflanke (18) größer ist als der axiale Abstand zwischen der zweiten statischen Dichtfläche (27) und der vorderen Nutflanke (18), und wobei die dynamische Dichtlippe (24) über eine größere Steifigkeit als die statische Dichtlippe (23) verfügt, wobei der Dichtungsring (5) bei rückseitiger Fluidbeaufschlagung unter Beibehaltung des dynamischen Dichtkontaktes seiner dynamischen Dichtlippe (24) in Richtung zu der vorderen Nutflanke (18) verschoben ist und mit der Abstützfläche (34) der dynamischen Dichtlippe (24) an der vorderen Nutflanke (18) der Haltenut (13) anliegt, wobei die statische Dichtlippe (23) unter elastischer Verformung mit ihrer zweiten statischen Dichtfläche (27) dichtend an der vorderen Nutflanke (18) anliegt.

2. Gerät nach Anspruch 1, **dadurch gekennzeichnet, dass** die statische Dichtlippe (23) eine derart größere Länge als die dynamische Dichtlippe (24) hat, dass sie im rückseitig unbeaufschlagten Zustand des Dichtungsringes (5) axial über die dynamische Dichtlippe (24) vorsteht, wobei die vordere Nutflanke (18) der Haltenut (13) zweckmäßigerweise in einer Radialebene bezüglich der Hauptachse (4) verläuft.

3. Gerät nach Anspruch 1 oder 2, **dadurch gekennzeichnet, dass** der Dichtungsring (5) mit axialem Bewegungsspielraum in der Haltenut (13) angeordnet ist, wobei zweckmäßigerweise die maximale axiale Abmessung des Dichtungsringes (5) kleiner ist als die in Achsrichtung der Hauptachse (4) gemessene Nutbreite der Haltenut (13).

4. Gerät nach einem der Ansprüche 1 bis 3, **dadurch gekennzeichnet, dass** die statische Dichtlippe (23) eine derartige Elastizität aufweist, dass sie bei rückseitiger Fluidbeaufschlagung des Dichtungsringes (5) in einer Weise radial verformbar ist, dass ihre erste statische Dichtfläche (14) vom Nutgrund (17) der Haltenut (13) abhebt.

5. Gerät nach einem der Ansprüche 1 bis 4, **dadurch gekennzeichnet, dass** sich der Dichtungsring (5) bei von vorne her erfolgender Fluidbeaufschlagung mit seiner Rückfläche (22) an der hinteren Nutflanke (19) abstützt und gleichzeitig zum einen die statische Dichtlippe (23) an den Nutgrund (17) der Haltenut (13) und zum anderen die dynamische Dichtlippe (24) an die nicht mit der Haltenut (13) versehene andere Gerätekomponente (2, 3) angedrückt wird.

6. Gerät nach einem der Ansprüche 1 bis 5, **dadurch gekennzeichnet, dass** die dynamische Dichtlippe (24) eine größere maximale Dicke als die statische Dichtlippe (23) hat.

7. Gerät nach einem der Ansprüche 1 bis 6, **dadurch gekennzeichnet, dass** die dynamische Dichtlippe (24) im.Übergangsbereich (28) zu dem Tragabschnitt (21) über eine größere Dicke verfügt als die statische Dichtlippe (23) in deren Übergangsbereich (29) zu dem Tragabschnitt (21).

8. Gerät nach einem der Ansprüche 1 bis 7, **dadurch gekennzeichnet, dass** die dynamische Dichtfläche (14) Bestandteil einer ringförmigen, im Querschnitt wulstartigen Erhebung der dynamischen Dichtlippe (24) ist.

9. Gerät nach einem der Ansprüche 1 bis 8, **dadurch gekennzeichnet, dass** zwischen den beiden Dichtlippen (23, 24) eine diesbezüglich konzentrische, zur vorderen Nutflanke (18) hin offene Ringnut (25) ausgebildet ist, die zweckmäßigerweise einen sich in Richtung zu der vorderen Nutflanke (18) erweiternden Querschnitt hat.

10. Gerät nach einem der Ansprüche 1 bis 9, **dadurch gekennzeichnet, dass** zwischen den beiden Dichtlippen (23, 24) eine diesbezüglich konzentrische, zur vorderen Nutflanke (18) hin offene Ringnut (25) ausgebildet ist, wobei das Verhältnis zwischen dem zwischen dem Nutgrund (35) dieser Ringnut (25) und der dynamischen Dichtfläche (14) gemessenen axialen Abstand (A) und dem zwischen der dynamischen Dichtfläche (14) und der Abstützfläche (34) gemessenen axialen Abstand (C) im Bereich von 0,1 bis 10 und vorzugsweise im Bereich von 0,2 bis 5 liegt, jeweils einschließlich der Bereichsgrenzen.

11. Gerät nach einem der Ansprüche 1 bis 10, **dadurch gekennzeichnet, dass** zwischen den beiden Dichtlippen (23, 24) eine diesbezüglich konzentrische, zur vorderen Nutflanke (18) hin offene Ringnut (25) ausgebildet ist, wobei das Verhältnis zwischen dem zwischen dem Nutgrund (35) dieser Ringnut (25) und der dynamischen Dichtfläche (14) gemessenen axialen Abstand (A) und der Summe aus diesem axialen Abstand (A) und dem zwischen der dynamischen Dichtfläche (14) und der ersten statischen Dichtfläche (26) gemessenen axialen Abstand (B) im Bereich von 0,1 bis 1 und vorzugsweise im Bereich von 0,2 bis 0,5 liegt, jeweils einschließlich der Bereichsgrenzen.

12. Gerät nach einem der Ansprüche 1 bis 11, **dadurch gekennzeichnet, dass** die die Haltenut (13) aufweisende Gerätekomponente (3) von der anderen Gerätekomponente (2) umschlossen ist und an ihrem Außenumfang die Haltenut (13) aufweist.

13. Gerät nach einem der Ansprüche 1 bis 12, **dadurch gekennzeichnet, dass** die die Haltenut (13) aufweisende Gerätekomponente (2) die andere Gerätekomponente (3) umschließt und an ihrem Innenumfang die Haltenut (13) aufweist.

## Claims

1. Fluid device with two device components (2, 3) capable of linear movement relative to one another along a main axis (4), with one of the device components (2, 3) encompassing the other device component (3, 2) and with a seal ring (5) coaxial to the main axis (4) fitted between them and being held in a radially open annular retaining groove (13) of the one device component (2, 3) which has a radially oriented groove base (17) and a rear and a front groove flank (19, 18), the seal ring having a support section (21) with an axial rear face (22) facing the rear groove flank (19) as well as two seal lips (23, 24) concentric to each other and extending away from the support section (21) and axially towards the front groove flank (18), wherein the seal lip adjacent to the groove base (17) is designed as a static seal lip (23) with a radially arranged first static sealing face (26) for static sealing contact with the groove base (17), and the other seal lip is designed as a dynamic seal lip (24) with a radially arranged dynamic sealing face (14) for dynamic sealing contact with the other device component (3, 2), **characterised in that** the static seal lip (23) has on its end face a second static sealing face (27) axially facing the front groove flank (18), and the front groove flank (18) extends axially in front of an end support face (34) of the dynamic seal lip (24), wherein the two seal lips (23, 24) are so matched to one another in their dimensions that, in the rear-side unpressurised state of the seal ring (5), the axial distance between the support face (34) and the front groove flank (18) is greater than the axial distance between the second static sealing face (27) and the front groove flank (18), wherein the dynamic seal lip (24) has greater stiffness than the static seal lip (23), wherein the seal ring (5) under rear-side fluidic pressurisation while maintaining the dynamic sealing contact of its dynamic seal lip (24), is shifted towards the front groove flank (18) and is in contact with the support face (34) of the dynamic seal lip (24) at the front groove flank (18) of the retaining groove (13), wherein the static seal lip (23) under elastic deformation makes sealing contact with its second static sealing face (27) at the front groove flank (18).

2. Device according to claim 1, **characterised in that** the static seal lip (23) has a greater length than the dynamic seal lip (24) such that, in the rear-side unpressurised state of the seal ring (5), it extends axially beyond the dynamic seal lip (24), wherein the front groove flank (18) of the retaining groove (13) expediently runs in a radial plane relative to the main axis (4).

3. Device according to claim 1 or 2, **characterised in that** the seal ring (5) is fitted in the retaining groove (13) with axial freedom of movement, wherein expediently the maximum axial dimension of the seal ring (5) is less than the groove width of the retaining groove (13) measured in the axial direction of the main axis (4).

4. Device according to any of claims 1 to 3, **characterised in that** the static seal lip (23) has such elasticity that, under rear-side fluidic pressurisation of the seal ring (5), it may be deformed radially in a manner which lifts its first static sealing face (14) from the groove base (17) of the retaining groove (13).

5. Device according to any of claims 1 to 4, **characterised in that** the seal ring (5), under fluidic pressurisation from the front, rests with its rear face (22) on the rear groove flank (19) and simultaneously on the one hand the static seal lip (23) is pressed on to the groove base (17) of the retaining groove (13), and on the other hand the dynamic seal lip (24) is pressed on to the other device component (2, 3) not provided with the retaining groove (13).

6. Device according to any of claims 1 to 5, **characterised in that** the dynamic seal lip (24) has a greater maximum thickness than the static seal lip (23).

7. Device according to any of claims 1 to 6, **characterised in that** the dynamic seal lip (24), in the transition zone (28) to the support section (21), has a greater thickness than the static seal lip (23) in its transition zone (29) to the support section (21).

8. Device according to a groove flank 1 to 7, **characterised in that** the dynamic sealing face (14) is a constituent part of an annular elevation, bead-like in cross-section, of the dynamic seal lip (24).

9. Device according to any of claims 1 to 8, **characterised in that** there is formed between the two seal lips (23, 24) an annular groove (25), in this respect concentric, open towards the front groove flank (18), and which expediently has a cross-section which widens towards the front groove flank (18).

10. Device according to any of claims 1 to 9, **characterised in that** there is formed between the two seal lips (23, 24) an annular groove (25), in this respect concentric and open towards the front groove flank (18), wherein the ratio between the axial distance (A) measured between the groove base (35) of this annular groove (25) and the dynamic sealing face (14) and the axial distance (C) measured between the dynamic sealing face (14) and the support face (34) lies in the range 0.1 to 10 and preferably in the range 0.2 to 5, in each case including the zone edges.

11. Device according to any of claims 1 to 10, **characterised in that** there is formed between the two seal lips (23, 24) an annular groove (25), in this respect concentric and open towards the front groove flank (18), wherein the ratio between the axial distance (A) measured between the groove base (35) of this annular groove (25) and the dynamic sealing face (14) and the sum of this axial distance (A) and the axial distance (B) measured between the dynamic sealing face (14) and the first static sealing face (26) lies in the range 0.1 to 1 and preferably in the range 0.2 to 5, in each case including the zone edges.

12. Device according to any of claims 1 to 11, **characterised in that** the device component (3) which has the retaining groove (13) is encompassed by the other device component (2) and has the retaining groove (13) on its outer periphery.

13. Device according to any of claims 1 to 12, **characterised in that** the device component (2) which has the retaining groove (13) is encompassed by the other device component (3) and has the retaining groove (13) on its inner periphery.

## Revendications

1. Appareil relevant de la technique des fluides, comprenant deux composants d'appareil (2, 3) pouvant être déplacés l'un par rapport à l'autre de manière linéaire en direction d'un axe principal (4), parmi lesquels l'un des composants d'appareil (2, 3) entoure l'autre composant d'appareil (3, 2) et entre lesquels est disposée une bague d'étanchéité (5) coaxiale par rapport à l'axe principal (4), laquelle est maintenue dans une rainure de maintien (13) de forme annulaire et radialement ouvert, présentant un fond de rainure (17) radialement orienté ainsi qu'un flanc de rainure arrière et un flanc de rainure avant (19, 18), de l'un des composants d'appareil (2, 3) et qui présente une section de support (21) pourvue d'une surface postérieure axiale (22) tournée vers le flanc de rainure (19) arrière, ainsi que deux lèvres étanches (23, 24) dépassant de manière à s'éloigner de la section de support (21) et disposées de manière concentrique l'une par rapport à l'autre et dépassant de manière axiale en direction du flanc de rainure (18) avant, dans lequel la lèvre étanche adjacente au fond de flanc (17) est réalisée sous la forme d'une lèvre étanche (23) statique pourvue d'une première surface étanche (26) statique disposée de manière radiale pour venir en appui en assurant l'étanchéité de manière statique au niveau du fond de rainure (17) et l'autre lèvre étanche est réalisée sous la forme d'une lèvre étanche (24) dynamique pourvue d'une surface étanche (14) dynamique disposée de manière radiale destinée à venir en appui en assurant l'étanchéité de manière dynamique au niveau de l'autre composant d'appareil (3, 2), **caractérisé en ce que** la lèvre étanche (23) statique présente côté frontal une deuxième surface étanche (27) statique tournée de manière axiale vers le flanc de rainure (18) avant, et **en ce que** le flanc de rainure (18) avant dépasse axialement à l'avant d'une surface d'appui (34) située côté frontal de la lèvre étanche (24) dynamique, dans lequel les dimensions des deux lèvres étanches (23, 24) sont adaptées l'une à l'autre de telle manière que dans l'état non contraint côté postérieur de la bague d'étanchéité (5), la distance axiale entre la surface d'appui (34) et le flanc de rainure (18) avant est plus grande que la distance axiale entre la deuxième surface étanche (27) statique et le flanc de rainure (18) avant, et dans lequel la lèvre étanche (24) dynamique dispose d'une plus grande rigidité que la lèvre étanche (23) statique, dans lequel la bague d'étanchéité (5) est coulissée en direction du flanc de rainure (18) avant en maintenant le contact étanche dynamique de sa lèvre étanche (24) dynamique lorsqu'elle est soumise côté postérieur à l'action d'un fluide et repose, par la surface d'appui (34) de la lèvre étanche (24) dynamique, au niveau du flanc de rainure (18) avant de la rainure de maintien (13), dans lequel la lèvre étanche (23) statique repose au niveau du flanc de rainure (18) avant en assurant l'étanchéité par sa deuxième surface étanche (27) statique moyennant une déformation élastique.

2. Appareil selon la revendication 1, **caractérisé en ce que** la lèvre étanche (23) statique a une longueur plus grande que celle de la lèvre étanche (24) dynamique de telle manière qu'elle fait saillie, dans l'état non contraint côté postérieur de la bague d'étanchéité (5), de manière axiale de la lèvre étanche (24) dynamique, dans lequel le flanc de rainure (18) avant de la rainure de maintien (13) s'étend de manière appropriée dans un plan radial par rapport à l'axe principal (4).

3. Appareil selon la revendication 1 ou 2, **caractérisé en ce que** la bague d'étanchéité (5) est disposée dans la rainure de maintien (13) avec un jeu de mouvement axial, dans lequel de manière appropriée la dimension axiale maximale de la bague d'étanchéité (5) est plus petite que la largeur de rainure, mesurée dans la direction axiale de l'axe principal (4), de la rainure de maintien (13).

4. Appareil selon l'une quelconque des revendications 1 à 3, **caractérisé en ce que** la lèvre étanche (23) statique présente une élasticité telle qu'elle peut être déformée de manière radiale, lorsque la bague d'étanchéité (5) est soumise à l'action d'un fluide côté postérieur, d'une manière telle que sa première surface étanche (14) statique se soulève du fond de rainure (17) de la rainure de maintien (13).

5. Appareil selon l'une quelconque des revendications précédentes 1 à 4, **caractérisé en ce que** la bague d'étanchéité (5) prend appui par sa surface postérieure (22) au niveau du flanc de rainure (19) arrière lorsqu'elle est soumise avec succès depuis l'avant à l'action d'un fluide, et **en ce que** dans le même temps la lèvre étanche (23) statique d'une part est appliquée par pression au niveau du fond de rainure (17) de la rainure de maintien (13) et la lèvre étanche (24) dynamique d'autre part n'est pas appliquée par pression au niveau de l'autre composant d'appareil (2, 3) pourvu de la rainure de maintien (13).

6. Appareil selon l'une quelconque des revendications 1 à 5, **caractérisé en ce que** la lèvre étanche (24) dynamique a une épaisseur maximale plus grande que la lèvre étanche (23) statique.

7. Appareil selon l'une quelconque des revendications 1 à 6, **caractérisé en ce que** la lèvre étanche (24) dynamique dispose dans la zone de passage (28) menant vers la section de support (21) d'une plus grande épaisseur que la lèvre étanche (23) statique dans sa zone de passage (29) menant à la section de support (21).

8. Appareil selon l'une quelconque des revendications 1 à 7, **caractérisé en ce que** la surface étanche (14) dynamique fait partie intégrante d'une partie surélevée de forme annulaire, de type bourrelet dans la section transversale, de la lèvre étanche (24) dynamique.

9. Appareil selon l'une quelconque des revendications 1 à 8, **caractérisé en ce qu'**une rainure annulaire (25) concentrique par rapport aux lèvres étanches, ouverte en direction du flanc de rainure (18) avant est réalisée entre les deux lèvres étanches (23, 24), laquelle rainure annulaire a de manière appropriée une section transversale s'élargissant en direction du flanc de rainure (18) avant.

10. Appareil selon l'une quelconque des revendications 1 à 9, **caractérisé en ce qu'**une rainure annulaire (25) concentrique par rapport aux lèvres étanches, ouverte en direction du flanc de rainure (18) avant est réalisée entre les deux lèvres étanches (23, 24), dans lequel le rapport entre la distance (A) axiale mesurée entre le fond de rainure (35) de ladite rainure annulaire (25) et la surface étanche (14) dynamique et la distance (C) axiale mesurée entre la surface étanche (14) dynamique et la surface d'appui (34) est compris dans la plage allant de 0,1 à 10 et, de préférence, dans la plage allant de 0,2 à 5, y compris respectivement les limites de plage.

11. Appareil selon l'une quelconque des revendications 1 à 10, **caractérisé en ce qu'**une rainure annulaire (25) concentrique par rapport aux lèvres d'étanchéité, ouverte en direction du flanc de rainure (18) avant est réalisée entre les deux lèvres étanches (23, 24), dans lequel le rapport entre la distance (A) axiale mesurée entre le fond de rainure (35) de ladite rainure annulaire (25) et la surface étanche (14) dynamique et la somme de ladite distance (A) axiale et de la distance (B) axiale mesurée entre la surface étanche (14) dynamique et la première surface étanche (26) statique est compris dans la plage allant de 0,1 à 1, et de préférence, dans la plage allant de 0,2 à 0,5, y compris respectivement les limites de plage.

12. Appareil selon l'une quelconque des revendications 1 à 11, **caractérisé en ce que** le composant d'appareil (3) présentant la rainure de maintien (13) est entouré par l'autre composant d'appareil (2) et présente, au niveau de sa périphérie extérieure, la rainure de maintien (13).

13. Appareil selon l'une quelconque des revendications 1 à 12, **caractérisé en ce que** le composant d'appareil (2) présentant la rainure de maintien (13) entoure l'autre composant d'appareil (3) et présente, au niveau de sa périphérie intérieure, la rainure de maintien (13).
